# EUROPEAN PATENT SPECIFICATION

(11) **EP 2 313 353 B1**
(45) Date of publication and mention of the grant of the patent: **26.10.2011**
(21) Application number: 08807131.1
(22) Date of filing: 09.06.2008
(51) Int. Cl.: C04B 35/524, H01M 4/14, H01M 4/20, H01M 4/66, H01M 4/68, H01M 10/06

(54) **METHOD FOR PRODUCING AN ELECTRODE FOR LEAD-ACID BATTERY**
VERFAHREN ZUR HERSTELLUNG EINER ELEKTRODE FÜR BLEI-SÄURE-BATTERIE
PROCÉDÉ DE PRODUCTION D`ELECTRODE POUR BATTERIE PLOMB-ACIDE

(43) Date of publication of application: 27.04.2011
(73) Proprietor: Commissariat à l'Énergie Atomique et aux Énergies Alternatives, 75015 Paris (FR)
(72) Inventor: KIRCHEV, Angel, Zhivkov, F-73100 Aix-les-Bains (FR)
(74) Representative: Dubreu, Sandrine
(86) International application number: PCT/IB2008/002468
(87) International publication number: WO 2009/150485

(56) References cited:
- JP-A- 2 158 057
- US-A- 4 098 967
- PETERSSON I ET AL: "Oxidation of electrodeposited lead-tin alloys in 5 M H2SO4" JOURNAL OF POWER SOURCES, ELSEVIER, AMSTERDAM, NL, vol. 91, no. 2, 1 December 2000 (2000-12-01), pages 143-149, XP004212130 ISSN: 0378-7753

## Description

### Background of the invention

The invention relates to an electrode for lead-acid battery comprising :
- a glassy carbon substrate
- an intermediate layer deposited on the glassy carbon substrate
- and an active layer of a lead-containing paste covering the intermediate layer.

The invention also related to a method for producing such an electrode.

### State of the art

Lead-acid battery is known to include at least one positive current collector, at least one negative current collector and an electrolytic solution. Usually, the negative and positive current collectors are lead grids or lead plates of various configurations (flat-plates, tubular-plates...) and on which is disposed an active material paste in order to form an electrode. Storage and release of electrical energy in lead-acid batteries is enabled by chemical reactions that occur in the paste.

However, the main drawback of the lead-acid batteries is their low specific energy. Flat-plate lead-acid battery has a specific energy about 30-35Wh/kg whereas tubular-plate lead-acid battery has a specific energy about 20-25Wh/kg. These low values of the specific energy result from the low utilization efficiency of the active materials in conjunction with the heavy weight of the lead current collectors.

In the past, it has been proposed to replace the lead of the current collectors by an alternative material having low density and high electrical conductivity in order to increase the specific energy of lead-acid batteries.

L.A. Yolshina and al. in the article "A lead-film electrode on an aluminium substrate to serve as a lead-acid battery plate" (Journal of Power Sources, 78 (1999) 84-87) have proposed to deposit compact lead layers on the surfaces of aluminium and aluminium alloys and to use the lead-film electrode produce on aluminium plate as positive electrode in a lead-acid battery. However the deposition process of the lead layer on the surface of aluminium and aluminium alloys is rather expensive and complicated. Furthermore any unprotected aluminium surface resulted from cracks or fissures of the lead layer will lead to accelerated grid corrosion process, causing fast battery failure.

In the International application WO-A- 2006/070405, it has been proposed a corrosion resistant grid structure for use in a lead-acid battery. The grid structure comprises:
- a substrate material formed by acrylonitrile butadiene styrene (ABS) coated with a metal layer of copper or nickel
- a lead/lead-based alloy layer deposited on the metal layer, and
- an electrically conductive and corrosion-resistant polyaniline layer providing corrosion protection for the lead/lead-based alloy layer.

Since the ABS is an insulator, the current collectors will show much higher electrical resistance and the plastic substrate is also unsuitable in a further cast on strap process also called COS process.

Another alternative consists to use graphite electrode-plate as mentioned in Patent US 5 512 390. In this patent, one of the plates forms a cathode and has a surface layer of lead in contact with the electrolyte whereas the other plate forms the anode and has a surface layer of manganese dioxide in contact with the electrolyte. Moreover, the article "Lead-acid cells with lightweight, corrosion-protected, flexible-graphite grids" of B. Hariprakash et al. (Journal of Power Sources, 173 (2007) 565-569) proposes to use lightweight grids prepared from flexible graphite sheets of mass density 1,1g.cm⁻³. The grids are then coated with a lead layer followed by a corrosion-resistant polyaniline layer. The corrosion-protected grids are then pasted with active materials.

Despite the low density and the high conductivity of the graphite, the active material sheds easy from these grids or plates. Indeed, the electroplated polyaniline layer used in the article of B. Hariprakash et al. degrades fast under the high potential of the operation of the positive plate. Moreover, the graphite is a very soft material and its surface cannot withstand the changes mechanical stress during the charge and the discharge and the quality of the lead layer is poor, causing fast peeling.

Another way to produce lightweight current collectors is the use of high-porous carbons. The open porosity of these materials is 90-95% of their apparent volume. The high-porous carbon can be carbon foam. For instance, patent US 6 979 513 describes a current collector formed from of a carbon foam material which may include carbon or carbon-based material that exhibit some degree of porosity. The positive and negative plates include then a current collector made from carbon foam and packed or coated by a chemically active material including, for example, an oxide or salt of lead. The carbon foam material can be obtained by subjecting various organic material to a carbonizing and/or graphitizing process. More particularly, at least of portion of carbon foam matrix is graphite.

However, the direct use of carbon foam as current collector for the positive plates is strictly limited due to the anodic degradation of the material in the potential domain of the oxygen evolution and the anodic degradation causes fast capacity loss in the first few cycles

As mentioned in the patent US 7 060 391, the high-porous carbon can also be reticulated vitreous carbon also called RVC. Furthermore, in order to improve the performance, especially the cycling performance, of lead-acid battery, patent US 7 060 391 proposes current collector structures based on light-weight, porous, open pore, high specific surface area substrates coated with lead or lead-tin alloy. The substrates can be reticulated vitreous carbon. Lead or lead-tin alloy can be deposited by electroplating method. Lead or lead-tin alloy covers the surface of the substrates and also occupies the openings of the reticulated substrates. Once the substrates have been coated, the corresponding tab and frame made of lead or lead-alloy are formed and the current collectors are subjected to pasting with any variety of lead oxide and/or lead sulfate based pastes in order to form electrodes. Such current collectors have the following drawbacks:
- as the surface of the RVC substrate is substantial, forming tab and frame can decrease substantially the specific energy of the battery,
- the internal resistance of the corresponding battery can be high due to the low ohmic resistance of the reticulated vitreous carbon,
- the reticulated vitreous carbon is brittle and the performance of the battery can be disappointing during operation under vibrations and other kinds of mechanical stress,
- the pasting operation with a RVC substrate coated by lead or lead-tin alloy is markedly harder than the pasting operation with other conventional grids,
- applying compression of the active block is nearly impossible, because the reticulated structure has poor elastic properties. The absence of compression leads to fast softening and peeling of the positive active material from the supporting grid at deep discharge or high rate cycling and to decrease in capacity.

Alternatively, in the abstract of the document JP2158057, it has been proposed to use a current collector consisting of a glassy carbon plate coated by a conductive, oxidation resistant film formed by SnO₂ or Ti₄0₇.

Then, a cathode active material is pasting on the surface of the film in order to form the corresponding electrode. Such a film is strongly bonded on the surface of the glassy carbon plate and does not separate from the plate even after long use. However, it isn't stable at deep discharge conditions and in the absence of the PbO₂ corrosion layer generally formed from a metallic lead support, the positive active material can easy loss the mechanical and electrical connection with the carbon support.

### Object of the invention

The object of the invention is to provide an electrode for lead-battery and a method for producing such an electrode remedying the shortcomings of the prior art.

More particularly, one object of the invention is to provide an electrode for lead-acid battery comprising a glassy carbon substrate, an intermediate layer deposited on the glassy carbon substrate and an active layer of a lead-containing paste covering the intermediate layer, having improved mechanical and electrical connection between the lead-containing paste and the substrate and a stabilized interface between the substrate and the intermediate layer even if deep discharge conditions are applied.

According to the invention, this object is achieved by the appended claims.

### Brief description of the drawings

Advantages and features will become more clearly apparent from the following description of particular embodiments of the invention given as non-restrictive examples only and represented in the accompanying drawings, in which :
- Figure 1 represents a particular embodiment of an electrode according to the invention in cross section.
- Figure 2 schematically represents a glassy carbon substrate in the form of a comb in front view.
- Figures 3 and 4 schematically represent a current collector consisting in the glassy carbon substrate according to figure 2 covering by an intermediate layer, respectively in front view and in cross section along A-A.
- Figure 5 schematically represents, in cross-section, an alternative embodiment of the current collector according to figures 3 and 4.
- Figures 6 and 7 represent the evolution of charge-discharge current and potential of tubular-plate electrodes, respectively assembled with lead-tin electroplated glassy carbon substrate in the form of a rod and with cast lead-2,8%wt antimony material in the form of a rod.

### Description of particular embodiments

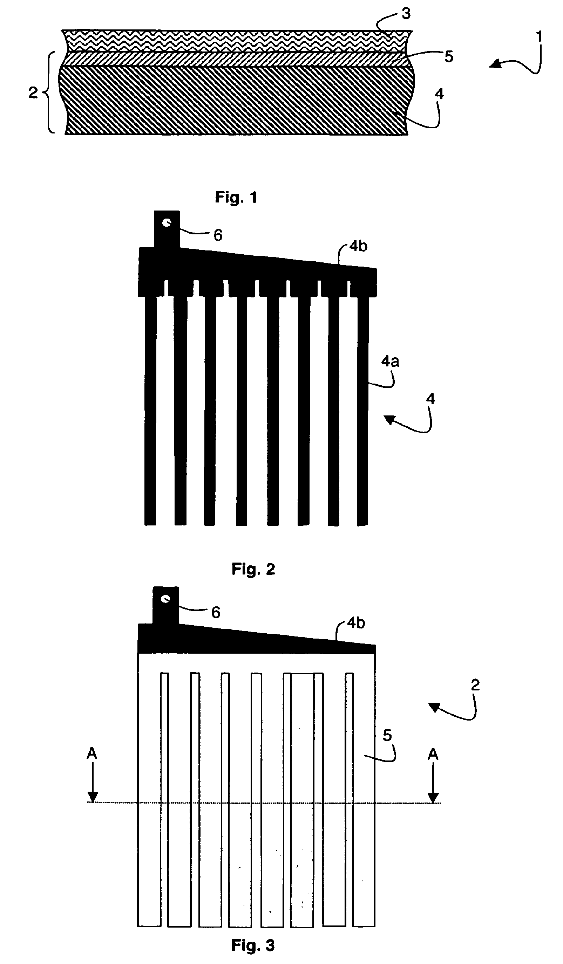

As represented in figure 1, an electrode 1 for lead-battery comprises a current collector 2 covered by an active layer 3 of lead-containing paste.

The current collector 2 is formed by a glassy carbon substrate 4 on which is deposited an intermediate layer 5. The glassy carbon substrate 4 has preferably a thickness comprised between 1 mm and 3mm whereas the thickness of the intermediate layer 5 is advantageously comprised between 50µm and 200µm.

The glassy carbon material is also called vitreous carbon, glassy polymeric carbon or vitreous polymeric carbon. The glassy carbon is a special form of carbon. It is a low-porous carbon. Thus, the glassy carbon substrate 4 comprises pores but the volume of these pores only represent between 0% and 10% of the apparent volume of the substrate. More particularly, the ratio between the volume of pores and the apparent volume is comprised between 1% and 6%. In addition, the glassy carbon material presents high electric conductivity property and mechanical properties similar to those of the glasses (hardness, capacity to polish the surface, etc). It has also a very high chemical resistance and it is electrochemically stable in a wide range of polarization potentials. Recycling of lead-acid batteries that comprise a glassy carbon substrate can be done by all existing technologies used for recycling of traditional lead-acid batteries. The glassy carbon substrate can be separated and used in other applications in the form of powder or subjected to incineration together with the rest of the plastic components of the battery (boxes, separators, etc).

The document JP2158057 cited in the state of the art has already proposed an electrode for a bipolar lead-storage battery comprising a glassy carbon plate. However the surface of the glassy carbon plate is covered by a layer of SnO₂ or by a layer of Ti₄O₇ presenting some major drawbacks.

It has been surprisingly found that covering the glassy carbon substrate 4 by an intermediate layer 5 made by a lead-based alloy allows remedying to the drawbacks of the document JP2158057. In addition, the intermediate layer 5 is a compact layer, i.e. a non-porous layer. The lead-based alloy is a lead-tin alloy comprising 2.5 weight percents of tin in total weight of the elements containing in the intermediate layer.

Such an intermediate layer 5 improves the adhesion of the active material paste on the current collector 2. The electrode is also more stable when deep discharge conditions are applied. In addition, the fact that the intermediate layer 5 contains tin is advantageous because tin prevents the electrode from the Predominant Capacity Loss (PCL) effect due to formation of highly resistive layer of PbO and PbOₙ with 1<n<2 in the corrosion layer. In fact, S_{N}(II) and S_{N}(IV) ions act as doping agents in the crystal lattice of PbO and PbOₙ with 1<n<2 and they decrease substantially the ohmic resistance of these two lead oxides that correspond to the compounds of the corrosion layer formed on the surface of the positive current collector during the implementation of the lead-acid battery. The presence of tin in the intermediate layer 5 also improves its mechanical resistance. However, the tin content in the intermediate layer 5 is preferably limited to 2.5 weight % because when the tin content in a lead-based alloy is more than 2.5%, its anodic corrosion rate increases markedly.

The following steps produce such an electrode :
- formation of the glassy carbon substrate 4 by plastic molding of a thermosetting resin in a predetermined shape followed by carbonizing the thermosetting resin in inert atmosphere,
- formation of the intermediate layer 5 by electroplating of the whole of the surface of the glassy carbon substrate 4 with the lead-tin alloy
- and formation of the active layer 3 by covering the intermediate layer 5 with a lead-containing paste.

The thermosetting resin can be a phenol-formaldehyde resin, a furfural alcohol resin, a polyester resin, an epoxy resin or a mixture of them. Carbonizing the thermosetting resin is achieved by heat treatment.

More particularly, the formation of the glassy carbon substrate 4 is followed by a surface treatment step of the glassy carbon substrate 4. The surface treatment step comprises :
- a mechanical treatment, for instance a sandblasting or a similar treatment in order to roughen the surface of substrate 4. In fact, the quality of the intermediate layer 5 is partly defined by the mechanical treatment.
- an electrochemical anodic etching of the glassy carbon surface. For instance, the etching conditions are the followings: Use of an alkaline solution of 1M NaOH, with an operation time of 10min and an anodic current density of 20mA/cm². During this operation, the glassy carbon substrate is cleaned and additionally roughened at sub-microlevel.
- and a water rinsing to remove the alkaline solution.

In addition, the tab of the glassy carbon substrate 4, used as connection element, is advantageously electroplated with copper. Electroplating the tab with copper ensures the quality of the cast on strap connection. In fact, the glassy carbon substrate cannot be wetted in liquid metals and copper has a melting temperature much higher than the lead and is nearly insoluble in it. Suitable conditions for the copper electroplating operation can be the following:
- an electrolyte bath comprising 250 g.L⁻¹ of CuS0₄.5H₂0 and 70 g.L⁻¹ of H₂SO₄,
- a cathodic current density of 40mA/cm²,
- a temperature comprised between 20°C and 25°C.

Moreover, the application of pulse current improves the quality of the copper layer. Suitable pulse current regime is for instance obtain by applying a cathodic current with a density of 60mA/cm² during 6s and then an anodic current with a density of 60mA/cm² applied during 1s.

An operation time of 30min allows obtaining a copper layer deposited on the tab having a thickness of about 25µm. The tab electroplated by copper is then rinsed with water.

The intermediate layer 5 is then formed by electroplating at least the whole of the surface of the glassy carbon substrate 4 with the lead-tin alloy. This step is the most critical operation of the process. It is in particular necessary to choose an electrolyte enabling the highest adhesion strength of the intermediate layer 5 to the glassy carbon substrate 4 and a constant thickness of the intermediate layer 5 to be obtained. An intermediate layer 5 made of 2.5%Sn-Pb alloy is formed by using an electrolyte comprising Pb(II) salt of the 4-hydroxybenzenesulfonic acid (Pb(p-C₆H₄OHSO₃)₂) and Sn (II) salt of the 4-hydroxybenzenesulfonic acid (Sn(p-C₆H₄OHSO₃)₂) and p-phenolsulfonic acid (p-C₆H₄OHSO₃H). The weight percent of the tin is about 2.5% of the total weight of metals containing in the electrolyte. In a particular embodiment, the electrolyte can be obtained by mixing :
- 140g.L⁻¹ of Pb(p-C₆H₄OHSO₃)₂,
- 40g.L⁻¹ of p-C₆H₄OHSO₃H
- 4g.L⁻¹ of Sn(p-C₆H₄OHSO₃)₂
- and 4g.L⁻¹ of gelatin.

The electroplating step can be performed with :
- a cathodic current density of 10 mA/cm²,
- a temperature of 20-30°C
- and an operation time of 85 or 190 minutes.

Moreover, the application of a pulse current during the electroplating step improves additionally the homogeneity of the layer. The pulse current characteristics can be as follows:
- cathodic current amplitude = 20mA/cm²,
- t ₒₙ= 1s
- and t _{off}=1s.

For instance, with an electroplating step performing during 85 minutes, the intermediate layer 5 has a thickness about 50 µm (+/- 2%). This thickness is sufficient for a current collector used in a negative electrode. For a current collector used in a positive electrode, the operation time can be doubled in order to deposit an intermediate layer 5 having a thickness between about 100µm and 200µm (+/- 2%).

Once the intermediate layer 5 is formed, the current collector is rinsed with water and dried on air flow. Then, the active layer 3 can be formed on the intermediate layer 5 by depositing the lead-containing paste in order to form the electrode. The lead-containing paste can be obtained by mixing PbO (75%) with H₂O (15%) and H₂SO₄ (10%).

Such a process presents the advantage to provide an electrode having improved mechanical and electrical connection between the lead-containing paste and the substrate. The interface between the substrate and the intermediate layer is also stabilized even if deep discharge conditions are applied.

Moreover, the electrodes for lead-acid battery can have any known shape. For instance, the glassy carbon substrate can be in the form of grid or comb, in order to obtain electrodes in the form of flat plates or of tubular plates.

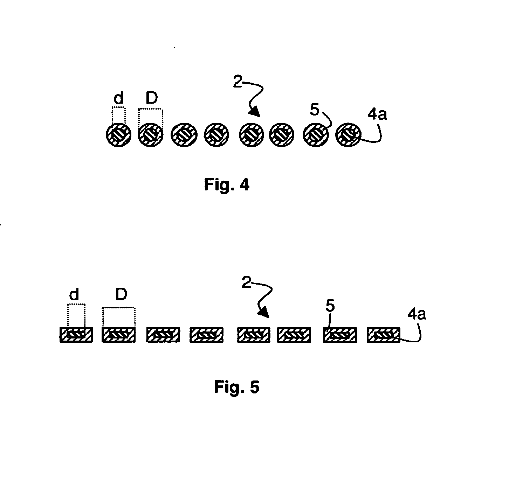

Figure 2 represents more particularly a glassy carbon substrate 4 in the form of a comb designed to be used to obtain a tubular-plate electrode. The glassy carbon substrate 4 comprises a plurality of parallel branches 4a connected together by a base 4b. The base 4b also comprises a tab 6 equipped with an opening 7. Figures 3 and 4 represent the glassy carbon substrate 4 covered by the intermediate layer 5. In addition, copper 8 has filled the opening 7 before the intermediate layer 5 is formed. The typical diameter of the opening 7 is about 2-3mm.

Moreover, the branches 4a of the glassy carbon substrate 4 have a round cross-section as represented on figure 4. This is the traditional design of a current collector used for a tubular-plate electrode.

However, the cross-section of the branches 4a can be of any type of form. The branches 4a can also have a rectangular cross-section as represented on figure 5 or a square cross-section or elliptic square cross-section. The form of current collector represented on figure 5 is also called Strap Grid Tubular Plates (SGTP). This form is advantageous because it increases substantially the performance of the corresponding lead-acid battery in comparison with the traditional design (round cross-section) : The load factor of the active material is much higher and the internal resistance is decreased. In addition, manufacturing the SGTP current collectors from glassy carbon substrate as represented in figure 5 is also much cheaper than the corresponding traditional current collectors from glassy carbon substrate as represented in figure 4. This great difference comes from the difference in the characteristic thickness of both types of branches. In figure 5 (SGTP design), the diameter d of a branch 4a is about 1 mm or 1,5mm and the diameter D of the branch 4a covered by the intermediate layer 5 is about 3mm or 4mm. In figure 4 (traditional design), the corresponding values are more than twice higher: d is about 3mm and D is about 9mm. The decreased thickness at the SGTP design reduces greatly the time of carbonization and hence the production cost.

In the tubular-plate design, the active material paste is encapsulated around each branch 4a covered by an intermediate layer 5, by means of a woven or non-woven textile tube. This tube maintains a constant pressure on the active material and prevents its softening or its non-cohesion from the current collector.

In another embodiment, glassy carbon branches covered by an intermediate layer of lead-tin having a thickness of 50µm, with a diameter D of about 3mm, were used to form a tubular-plate electrode having a diameter of about 6mm and a theoretical capacity about 300mAh at 50% load factor of the active material. A same type of electrode is assembled by using spines cut off from commercial tubular-grids with a Pb-2,8wt% Sb alloy.

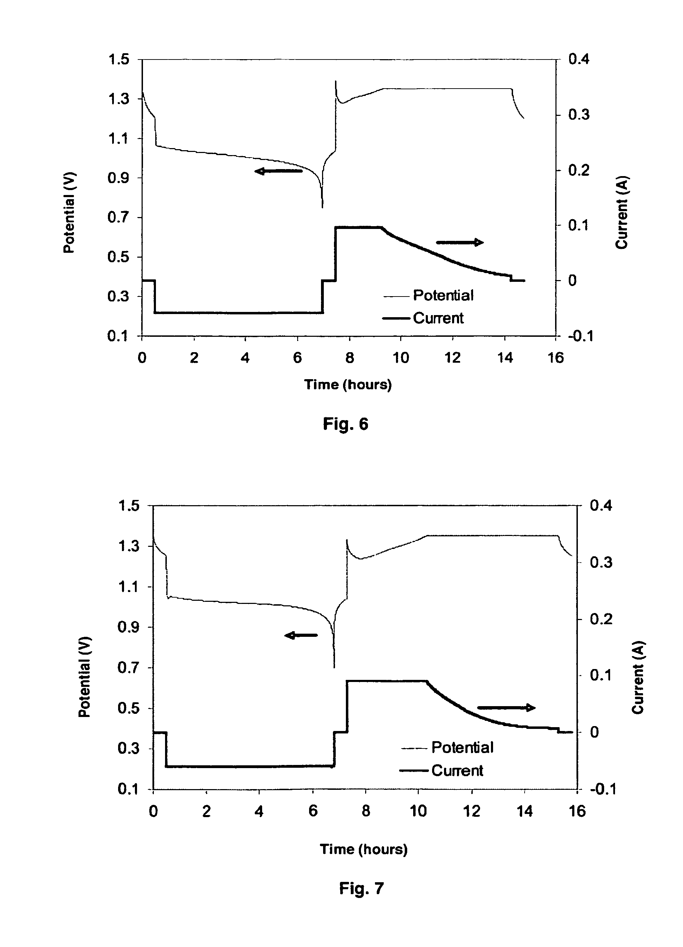

Figures 6 and 7 show the evolution of the current and of the positive plate potential (measured vs. Ag/Ag₂SO₄ reference electrode) during the 28^{th} charge/discharge cycle. It can be seen that the electrochemical performance of the lead-tin electroplated glassy-carbon tubular electrode is identical with the one of the lead-antimony cast spine.

The invention is not limited to the embodiments described above. More particularly, the current collector can have the form of :
- a grid suitable for a flat negative or positive plate electrode. With a glassy carbon substrate having a thickness of 1mm, the production costs of the glassy carbon substrate are minimal. After the electroplating operation, the thickness of the grid increases for instance to 1,1mm. The manufacturing of lead-acid battery plates with such thickness results in increased battery power and active materials utilization.
- a plate used in a bipolar lead-acid battery. For instance, a glassy carbon plate having a thickness of 1-1,5mm can be completely electroplated with a lead-tin layer having a thickness of 50µm. The plate comprises a plurality of ribs with a length of 2mm and a typical inter-ribs dimension of 10mm.
- a flexible foil used in a spiral-wound lead-acid battery with ultra-thin plates. For instance, the flexible foil can have a thickness of 60-180µm and the optimal thickness of the intermediate layer is 30µm. Further the electroplated glassy carbon foil is double side pasted with 200-250µm layers of basic lead sulphates and water mixture (so called "paste").

In addition, the glassy carbon material forming the substrate of an electrode according to the invention must not be confused with reticulated vitreous carbon (RVC) as disclosed in US 7 060 391. In fact, reticulated vitreous carbon is a high-porous carbon, in which the open porosity is about 90%-95% of its apparent volume.

## Claims

1. Method for producing an electrode for lead-acid battery **characterized in that** it comprises at least the following steps:
- formation of a glassy carbon substrate (4) by plastic molding of a thermosetting resin in a predetermined shape followed by carbonizing the thermosetting resin in inert atmosphere, the volume of the pores in the glassy carbon substrate (4) being comprised between 0% and 10% of its apparent volume,
- formation of a compact intermediate layer (5) made from a lead-tin alloy with a percent of tin in the alloy of about 2.5 % in weight on at least one part of a surface of the glassy carbon substrate (4), by an operation of electroplating with an electrolyte comprising Pb(II) salt of the 4-hydroxybenzensulfonic acid, Sn(II) salt of the 4-hydroxybenzenesulfonic acid and p-phenolsulfonic acid,
- and formation of an active layer (3) of lead-containing paste by covering the intermediate layer (5) with the said lead-containing paste.

2. Method according to claim 1, **characterized in that** formation of the glassy carbon substrate (4) is followed by a surface treatment step of the glassy carbon substrate (4) comprising a mechanical treatment, an electrochemical etching and a water rinsing.

3. Method according to claim 1 or 2, **characterized in that** the glassy carbon substrate (4) comprising a tab (7), electroplating said tab (7) with copper is achieved before the formation of the compact intermediate layer (5).

4. Method according to any one of claims 1 to 4, **characterized in that** the volume of the pores in the glassy carbon substrate (4) is comprised between 1 % and 6% of its apparent volume.

5. Method according to any one of claims 1 to 4, **characterized in that** the predetermined shape of the glassy carbon substrate (4) is a comb.

6. Method according to claim 5, **characterized in that** the glassy carbon substrate (4) comprises a plurality of branches (4a), having a round rectangular, square or elliptic cross-section.

7. Method according to any one of claims 1 to 6, **characterized in that** the glassy carbon substrate (4) has a thickness comprised between 1mm and 3mm.

8. Method according to any one of claims 1 to 7, **characterized in that** the compact intermediate layer (5) has a thickness comprised between 50µm and 200µm.

9. Method according to any one of claims 1 to 8, **characterized in that** the electrolyte is obtained by mixing:
- 140g.L^{-l} of Pb(p-C₆H₄OHSO₃)₂,
- 40g.L⁻¹ of p-C₆H₄OHSO₃H
- 4g.L⁻¹ of Sn(P-C₆H₄OHSO₃)₂
- and 4g.L⁻¹ of gelatin.

## Patentansprüche

1. Verfahren zur Herstellung einer Elektrode für eine Blei-Säure-Batterie, **gekennzeichnet durch** wenigstens die folgenden Schritte:
- Bildung eines glasigen Kohlenstoffsubstrats (4) **durch** Kunststoffformen eines thermohärtenden Harzes in einer vorbestimmten Form, gefolgt von Verkohlen des thermohärtenden Harzes in inerter Atmosphäre, wobei das Volumen der Poren in dem glasigen Kohlenstoffsubstrat (4) zwischen 0 % und 10 % seines sichtbaren Volumens liegt,
- Bildung einer kompakten Zwischenschicht (5), hergestellt aus einer Blei-ZinnLegierung mit einem Prozentsatz von Zinn in der Legierung von etwa 2,5 Gewichtsprozent, auf wenigstens einem Teil einer Oberfläche des glasigen Kunststoffsubstrats (4) **durch** eine Elektroplattierungsoperation mit einem Elektrolyten, der Pb(II)-Salz der 4-Hydroxybenzoesulfonsäure, Sn(II)-Salz der 4-Hydroxybenzoesulfonsäure und p-Phenolsulfonsäure enthält,
- und Bildung einer aktiven Schicht (3) aus einer Blei enthaltenden Paste **durch** Bedecken der Zwischenschicht (5) mit der Blei enthaltenden Paste.

2. Verfahren nach Anspruch 1, **dadurch gekennzeichnet, dass** auf die Bildung des glasigen Kohlenstoffsubstrats (4) ein Oberflächenbehandlungsschritt des glasigen Kohlenstoffsubstrats (4) folgt, der eine mechanische Behandlung, ein elektrochemisches Ätzen und ein Wasserspülen umfasst.

3. Verfahren nach Anspruch 1 oder 2, **dadurch gekennzeichnet, dass** das glasige Kohlenstoffsubstrat (4) eine Fahne (7) aufweist, wobei vor der Bildung der kompakten Zwischenschicht (5) ein Elektroplattieren der Fahne (7) mit Kupfer ausgeführt wird.

4. Verfahren nach einem der Ansprüche 1 bis 4, **dadurch gekennzeichnet, dass** das Volumen der Poren im glasigen Kohlenstoffsubstrat (4) zwischen 1 % und 6 % seines sichtbaren Volumens liegt.

5. Verfahren nach einem der Ansprüche 1 bis 4, **dadurch gekennzeichnet, dass** die vorbestimmte Form des glasigen Kohlenstoffsubstrats (4) ein Kamm ist.

6. Verfahren nach Anspruch 5, **dadurch gekennzeichnet, dass** das glasige Kohlenstoffsubstrat (4) mehrere Zinken (4a) aufweist, die einen runden, rechteckigen, quadratischen oder elliptischen Querschnitt aufweisen.

7. Verfahren nach einem der Ansprüche 1 bis 6, **dadurch gekennzeichnet, dass** das glasige Kohlenstoffsubstrat (4) eine Dicke zwischen 1mm und 3mm aufweist.

8. Verfahren nach einem der Ansprüche 1 bis 7, **dadurch gekennzeichnet, dass** die kompakte Zwischenschicht (5) eine Dicke zwischen 50µm und 200µm aufweist.

9. Verfahren nach einem der Ansprüche 1 bis 8, **dadurch gekennzeichnet, dass** der Elektrolyt erhalten wird durch Mischen von:
- 140 g.L⁻¹ Pb(p-C₆H₄OHSO₃)₂,
- 40g.L⁻¹ P-C₆H₄OHSO₃ H,
- 4g.L⁻¹ Sn(p-CₛH₄OHSO₃)₂ und
- 4g.L⁻¹ Gelatine.

## Revendications

1. Procédé de réalisation d'une électrode pour batterie acide-plomb **caractérisé en ce qu'**il comporte au moins les étapes suivantes:
- la formation d'un substrat (4) en carbone vitreux par moulage plastique d'une résine thermodurcissable dans une forme prédéterminée suivie de la carbonisation de la résine thermodurcissable sous une atmosphère inerte, le volume des pores dans le substrat (4) en carbone vitreux étant compris entre 0% et 10% de son volume apparent,
- la formation, sur au moins une partie de la surface du substrat (4) en carbone vitreux, d'une couche compacte intermédiaire (5) réalisée à partir d'un alliage de plomb-étain avec un pourcentage d'étain dans l'alliage d'environ 2,5% en poids, par une opération de galvanoplastie avec un électrolyte comportant un sel de Pb(II) de l'acide 4-hydroxybenzenesulfonic, un sel de Sn(II) de l'acide 4-hydroxybenzenesulfonic et un acide de p-phenolsulfonic,
- et la formation d'une couche active (3) d'une pâte contenant du plomb par couverture de la couche intermédiaire (5) avec ladite pâte contenant du plomb.

2. Procédé selon la revendication 1 **caractérisé en ce que** la formation du substrat (4) en carbone vitreux est suivie par une étape de traitement de surface du substrat (4) en carbone vitreux comportant un traitement mécanique, une gravure électrochimique et un rinçage à l'eau.

3. Procédé selon l'une des revendications 1 et 2 **caractérisé en ce que** le substrat (4) en carbone vitreux comportant une languette (7), la galvanoplastie avec du cuivre de cette languette (7) est réalisée avant la formation de la couche compacte intermédiaire (5).

4. Procédé selon l'une quelconque des revendications 1 à 3 **caractérisé en ce que** le volume des pores dans le substrat (4) en carbone vitreux est compris entre 1% et 6% de son volume apparent.

5. Procédé selon l'une quelconque des revendications 1 à 4 **caractérisé en ce que** la forme prédéterminée du substrat (4) en carbone vitreux est un peigne.

6. Procédé selon la revendication 5 **caractérisé en ce que** le substrat (4) en carbone vitreux comporte une pluralité de branches (4a), ayant une section ronde, rectangulaire, carrée ou elliptique.

7. Procédé selon l'une quelconque des revendications 1 à 6 **caractérisé en ce que** le substrat (4) en carbone vitreux a une épaisseur comprise entre 1 mm et 3mm.

8. Procédé selon l'une quelconque des revendications 1 à 7 **caractérisé en ce que** la couche compacte intermédiaire (5) a une épaisseur comprise entre 50µm et 200µm.

9. Procédé selon l'une quelconque des revendications 1 à 8 **caractérisé en ce que** l'électrolyte est obtenu en mélangeant :
- 140g.L⁻¹ de Pb(p-C₆H₄OHSO₃)₂,
- 40g.L⁻¹ de p-C₆H₄OHSO₃H
- 4g.L⁻¹ de Sn(p-C₆H₄OHSO₃)₂
- et 4g.L⁻¹ de gélatine.
